# EUROPEAN PATENT SPECIFICATION

(11) **EP 2 430 853 B1**
(45) Date of publication and mention of the grant of the patent: **26.02.2014**
(21) Application number: 09779440.8
(22) Date of filing: 11.05.2009
(51) Int. Cl.: H04W 28/06

(54) **METHOD, DEVICE AND SYSTEM FOR DATA PROCESSING IN A NETWORK**
VERFAHREN, VORRICHTUNG UND SYSTEM ZUR DATENVERARBEITUNG IN EINEM NETZWERK
PROCÉDÉ, DISPOSITIF ET SYSTÈME PERMETTANT UN TRAITEMENT DE DONNÉES DANS UN RÉSEAU

(43) Date of publication of application: 21.03.2012
(73) Proprietor: Nokia Solutions and Networks Oy, 02610 Espoo (FI)
(72) Inventor: HOFMANN, Juergen, 86504 Merching (DE)
(74) Representative: Borgström, Markus
(86) International application number: PCT/EP2009/055669
(87) International publication number: WO 2010/130280

(56) References cited:
- US-B1- 6 898 194
- "DTX performance of SACCH for VAMOS" 3GGP TSG-GERAN MEETING 41, [Online] 20 February 2009 (2009-02-20), pages 1-5, XP002566226 Retrieved from the Internet: URL:http://www.3gpp.org/ftp/Specs/html-inf o/TDocExMtg--GP-41--26384.htm> [retrieved on 2010-01-29]
- "Introduction of VAMOS" 3GGP TSG-GERAN MEETING 41, CHANGE REQUEST, [Online] 20 February 2009 (2009-02-20), pages 1-5, XP002566227 Retrieved from the Internet: URL:http://www.3gpp.org/ftp/Specs/html-inf o/TDocExMtg--GP-41--26384.htm> [retrieved on 2010-01-29]

## Description

The invention relates to a method, to a device and to a system for data processing in a network and also to a communication system comprising such a device.

GERAN standardization deals with voice services over adaptive multiuser on one slot (VAMOS) to reduce CAPEX as well as OPEX for voice services. VAMOS in particular improves voice capacity in GSM networks by utilizing radio frequency and time slot for several users.

Utilizing VAMOS, two users may be allocated to the same particular half-rate or full-rate resource. Hence, a total of 4 half rate users can be served by a slot. This is achieved by utilizing an adaptive symbol constellation according to [GP-081949, "WID Voice services over Adaptive Multiuser on One Slot (VAMOS)", Nokia Siemens Networks et al., 3GPP GERAN#40]. A pair of users is mapped to the same radio channel in terms of radio frequency and timeslot, the user signals being distinguished by the usage of a different training sequence code. In downlink direction, a common baseband signal generated by quaternary modulation (AQPSK) is used to multiplex both user signals, whereas in uplink direction two signals from different users (i.e. mobile terminals) are received applying a virtual MIMO receiver at the base station. This allows increasing the voice capacity of the system.

Discontinuous transmission (DTX) is a method of momentarily powering-down, or muting, e.g., a mobile or portable wireless telephone set when there is no voice input to the set. This optimizes the overall efficiency of, e.g., a wireless voice communication system.

Additional gains are achieved if DTX is in use on a Traffic Channel (TCH), increasing interference diversity for each user on this channel. In case of uplink, the interference from a paired user being in DTX state is not present, whereas in case of downlink, if the paired user is silent, GMSK can be transmitted to the user of the active channel and hence due to the suppression of the interfering signal belonging to the paired user, an improved signal quality can be achieved.

Each TCH is assigned a Fast Associated Control Channel (FACCH) and a Slow Associated Control Channel (SACCH). In contrast to the TCH, FACCH and SACCH cannot be set to DTX state. Hence, DTX gains as can be obtained for the TCH are missing for both associated control channel types, FACCH as well as SACCH. This has a significant effect for SACCH, because it is operated on a regular rate (each 480ms), whereas FACCH is used sporadically on a on-demand basis.

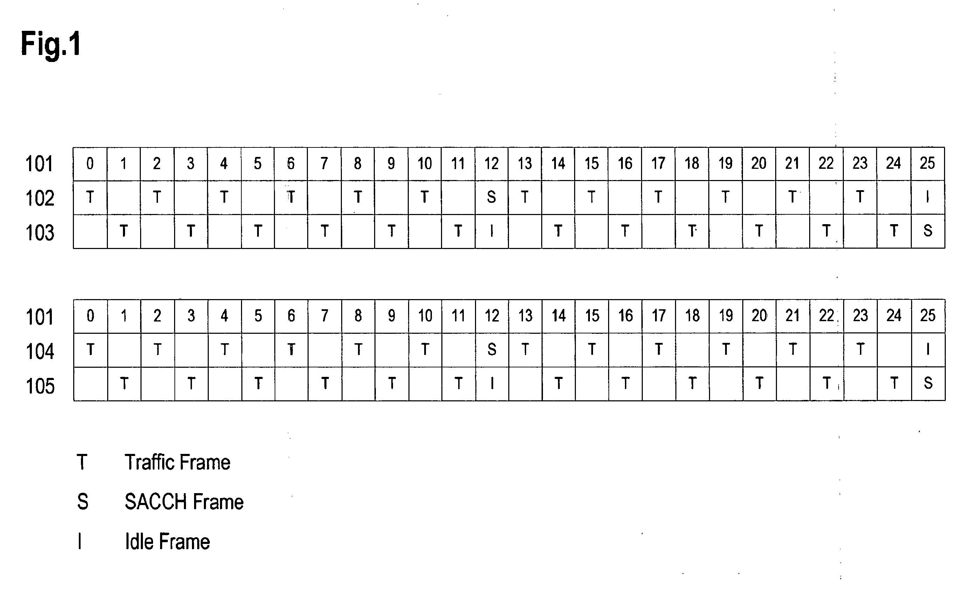

In the existing VAMOS concept, both users mapped to the same radio channel have their SACCH bursts scheduled always at the same time, hence suffer permanent SACCH collision. **Fig.1** shows the existing VAMOS concept with legacy SACCH mapping thereby inflicting permanent collisions of the SACCH bursts.

Fig.1 shows TDMA frames 0 to 25 out of a SACCH multiframe of 104 TDMA frames for a timeslot 101 according to GSM. The timeslot 101 is utilized in a half-rate mode. A first half-rate user 102 and a second half-rate user 103 are provided with non-overlapping frames. Said frames comprise traffic frames T, idle frames I and SACCH frames S. The same timeslot 101 is utilized by a first VAMOS half-rate user 104 and by a second VAMOS half-rate user 105 in an analogue manner compared to the half-rate users 102 and 103. The legacy half-rate user 102 and the first VAMOS half-rate user 104 interfere with each other, in particular permanent SACCH collisions occur for the SACCHs of the user 102 and the user 104. The same type of collision applies for users 103 and 105.

In the VAMOS mode interference comprises the paired interferer in the same cell and the interference from users in other cells (external interference). Hence, a CIR required for achieving a target FER is higher than the CIR of the single user legacy mode. In some cases, i.e. operating a robust AMR codec, the SACCH may identify a weak channel in terms of interference.

US 6 898 194 B1 (VEDRINE ARNAUD [SE]) 24 MAY 2005 (2005-05-24) relates in general to multiplexing users in a telecommunication system. The telecommunication system utilizes a discontinuous transmission technique during which a mobile station temporarily discontinues communication of real time information. The telecommunication system provides for the transmission of a silence descriptor message to notify a receiver of the beginning of a silent period. The silence descriptor messages are updated periodically during a silent discontinuous transmission period by sending new silence descriptor messages according to a predetermined schedule. A mobile station in a downlink discontinuous transmission period listens to and receives silence descriptor messages on a dedicated downlink silence descriptor channel. Thus in US 6 898 194 B1 the silent descriptor message is not conveyed within a data unit that is also at least partially used for conveying a discontinuous transmission information.

The **problem** to be solved is to overcome the disadvantages explained above and in particular to improve a performance of a control information other than DTX information that may in particular be conveyed in a block, a (logical) channel or a packet of a communication system. The control information may for example comprise a SACCH according to a VAMOS model and is related, e.g., to at least one VAMOS half-rate channel.

This problem is solved according to the features of the independent claims. Further embodiments result from the depending claims.

In order to overcome this problem, a method for data processing in a network is provided, wherein a channel in DTX state is used for conveying control information other than DTX information within a data unit that is also at least partially used for conveying a DTX information.

Said data unit may be any block or data portion utilized for communication and/or data transmission purposes. Hence, DTX information may be conveyed together with control information other than DTX information within said data unit.

It is noted that a DTX state is any state that indicates that no actual user traffic other than silence is present; such silence can be encoded in a bandwidth efficient way using only a portion of a block or frame that is otherwise be used for, e.g., voice data. The encoded silence may comprise a comfort noise level that gives the listener an impression of the silent originator still being present in the phone call. It is also possible that DTX is applicable for CS connections/services and/or for PS connections/services. The DTX state may be further applicable for wireless or wired communication systems, in particular conveying voice, audio/video and/or other user data. The DTX state may indicate a temporary inactivity of a data user, e.g., waiting after a mouse click that an Internet page is loaded.

As the SACCH delivers commands in DL direction, such as UL transmit power and UL timing advance commands, and neighbor cell information as well as it delivers reports in UL direction, such as DTX used state and measurement reports, a high integrity of the SACCH hence is of advantage to enable viable service operation for VAMOS in particular with regard to an operation in tight frequency reuse scenarios.

Herein, the term user in particular refers to any mobile station or mobile device, wherein a mobile device is a device with a wireless interface, e.g., capable of wireless communication with a base station, a base-transceiver station, a NodeB, a eNodeB or a repeater. The mobile device may be a cellular phone, a laptop a personal digital assistant comprising a wireless interface or a fixed wireless module, e.g., used for emergency, for telematic services, control or for measurement applications. The wireless interface may work according to any existing or upcoming communication standard, e.g., according to 2G, 2.5G, 3G, 4G, WiMAX, WLAN or the like.

In an embodiment, said control information comprises signaling information, in particular control information of one of layer 1, layer 2 or layer 3 and/or mobility control information, in particular higher layer control information.

In another embodiment, in DTX state a traffic channel may convey a SID message, e.g., a SID_UPDATE message, and the control information can be conveyed with that traffic channel as the SID message may require only a portion of the data available in the traffic channel. This efficiently utilizes the available space of the traffic channel by also conveying control information other than DTX information via the traffic channel during DTX state.

In a further embodiment, a transmission of DTX information of a channel or a short activity of a data user is delayed in case it collides with a control information of a paired channel.

A DTX information may be any data portion or message indicating that a DTX state is triggered, maintained or over. An example for a DTX information is a SID message. Such SID message may in particular not be conveyed (e.g., by a base station) in case it would collide with a control information of a paired channel, e.g., a SACCH of a paired channel. This advantageously reduces the interference and improves the efficiency of the SACCH.

Said paired channels utilize the same resource, e.g., the same radio channel in terms of frequency and/or timeslot and/or sequence of TDMA frame numbers, wherein the channels can be separated by different training sequence codes. Also, CDMA may apply to separate such paired channels.

In a next embodiment, said control information is conveyed in a control block.

It is noted that said block can be any kind of block, frame, slot, channel, in particular a virtual channel, a time segment or the like.

It is also an embodiment that the control block or a portion thereof is swapped with a block of a traffic channel.

Hence swapping may in particular refer to changing locations, in particular exchanging blocks of same sizes.

It is noted that said traffic channel may comprise a block, a resource block, a frame, a slot, a channel, a virtual channel, a time segment or the like. It is further noted that the traffic channel may be utilized for conveying user data, e.g., voice and/or audio/video or other user data (e.g., program data or all kinds of data supplied via the Internet). The traffic channel may in particular be a traffic channel according to GSM.

Pursuant to another embodiment, the control block or a portion thereof is swapped with a block of a traffic channel using an adjacent allocation.

This efficiently minimizes any additional delay and allows for a similar processing of paired users by the base station.

According to an embodiment, the control block or a portion thereof is swapped with a block of the traffic channel in case it collides with a control information of a paired channel.

According to another embodiment, said control information is provided via a SACCH.

In yet another embodiment, said network comprises a wireless and/or a wired network.

Hence, all sorts of wireless communication systems may be applicable, in particular 2G, 2.5G, 3G, 4G, WiMAX, WLAN communication systems and combinations thereof. The wireless communication system may convey data (voice, speech or any other user data, signaling or control information) between a base station and a mobile station (also referred to as mobile terminal or mobile device). Also wired networks can be utilized by this approach, in particular optical networks or networks applying DSL.

According to a next embodiment, the network is a wireless network utilizing half-rate channels, in particular in a VAMOS mode.

Hence, a total of 4 users (mobile stations) can be served by a slot. It is noted that additional users may be served via code multiplexing techniques utilizing, e.g., orthogonal codes and/or different training sequence codes.

Pursuant to yet an embodiment, said data processing is processed in uplink direction and/or in downlink direction.

The problem stated above is also solved by a device comprising and/or being associated with a processor unit and/or a hard-wired circuit and/or a logic device that is arranged such that the method as described herein is executable thereon.

According to an embodiment, said device is a communication device, in particular a or being associated with a base station, a base-transceiver station, a NodeB, a eNodeB, a repeater, a fixed wireless terminal, a modem, a mobile station or an access point.

The problem stated supra is further solved by a communication system comprising the device as described herein.

Embodiments of the invention are shown and illustrated in the following figures:
- Fig.2: shows a VAMOS concept applying a swapped SACCH mapping avoiding permanent SACCH collisions between paired half-rate sub-channels;
- Fig.3: shows a flow chart visualizing a swapped SACCH concept, i.e. a control logic that provides swapping TCH burst and SACCH burst;
- Fig.4: shows a flow chart providing an adaptive scheduling of SID_UPDATE messages in case of "swapped SACCH".

The approach provided in particular suggests utilizing at least one portion of a transmission that is also otherwise used for DTX purposes to convey a signaling and/or control information other than DTX information.

The portion of the transmission can be a block, a resource block, a frame, a channel, a time segment, or the like.

The signaling and/or control information may comprise a SACCH or any other signaling and/or control channel.

The approach provided is in particular applicable in a wireless environment, e.g., in a GSM, 2.5G, 3G, 4G, WLAN, WiMAX or any upcoming wireless communication system.

It is also an aspect of the approach provided herewith that the portion of a transmission utilized is swapped with another portion of the transmission that is used for conveying the signaling and/or control information. This allows for efficiently reducing interference between different portions conveying signaling and/or control information in particular in a VAMOS half-rate channel.

The approach provided in particular bears at least one of the following features:
a) It allows utilizing DTX gains for the SACCH in the VAMOS mode.
b) It allows synchronizing of VAMOS sub-channels in terms of measurement reporting, uplink power control and uplink timing advance control for both users in paired VAMOS sub-channels.
c) It modifies legacy SACCH mapping only to a minor extent.

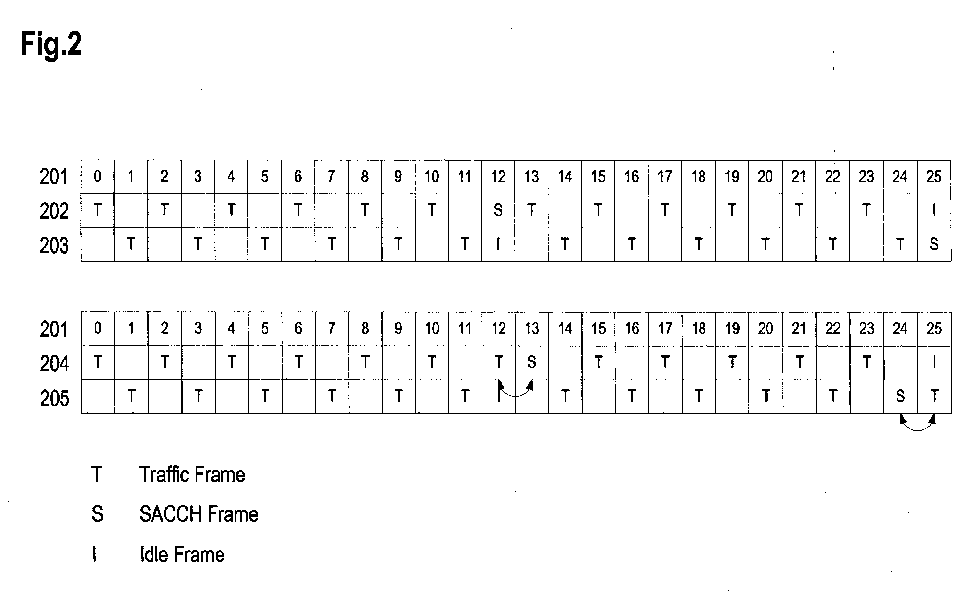

**Fig.2** shows a schematic diagram visualizing a VAMOS concept applying a swapped SACCH mapping thereby avoiding any permanent SACCH collisions.

Fig.2 shows frames 0 to 25 of a timeslot 201 according to GSM. The timeslot 201 is utilized in a half-rate mode. A first half-rate user 202 and a second half-rate user 203 are provided with non-overlapping frames. Said frames comprise traffic frames T, idle frames I and SACCH frames S. The SACCH frame for user 202 is located at frame number 12 and the SACCH frame for user 203 is located at frame number 25. At this frame number, the respective other user has an idle frame avoiding interference on the SACCH originated by the respective user 202 or 203. The users 202 and 203 may be "legacy user", i.e. these users may be mobile terminals that are capable of half-rate processing.

The same timeslot 201 is utilized by a first VAMOS half-rate user 204 and by a second VAMOS half-rate user 205. In order to avoid any interference of the SACCH of paired users 202 and 204 (also for paired users 203 and 205), the SACCH of the VAMOS half-rate users 204 and 205 may be swapped with a traffic frame, in particular with the traffic block sent in an adjacent TDMA frame: For user 204, the SACCH located at TDMA frame number 13 is swapped with a traffic burst T located at TDMA frame number 12. With regard to user 205, the SACCH located at TDMA frame number 24 is swapped with a traffic burst T located at the TDMA frame number 25. This approach applies for subsequent and preceding TDMA multiframes of length 26.

Swapping allocations in adjacent TDMA frames bears the advantage that synchronization at the base station still works in a predefined way, i.e., the measurement information conveyed via the SACCH towards the base station arrive in a time window comparable to the timing of current VAMOS half-rate implementations. However, the advantage of this approach is a significant reduction of interference between the users 202 and 204 (as well as between the users 203 and 205), which are code multiplexed across the same timeslots 201 or distinguished by a different training sequence code.

Hence, this approach may in particular swap TCH and SACCH bursts for the VAMOS mobile station being multiplexed with a legacy mobile station on the same radio channel. By applying such swapping mechanism, permanent SACCH collisions can be avoided in downlink direction as well as in uplink direction. It is noted that the approach provided can be used in downlink direction (e.g., from a base station towards a mobile terminal) as well as in uplink direction (e.g., from the mobile terminal towards the base station).

Hence, on average, the quality of reception of the SACCH is improved compared to existing solutions. In case two VAMOS mobile stations are multiplexed, one mobile station may apply the legacy SACCH mapping and the other may apply the swapped SACCH mapping mechanism as introduced.

It is noted that also several users (mobile stations) may be multiplexed in a TDMA frame 201, i.e., three or more users may share the time slots of the TDMA frame 201. In addition or as an alternative, the code multiplexing may be provided for more than two dimensions, i.e. several (more than two) paired users (mobile stations) could be supplied via different code multiplexing or via different training sequence codes, wherein each dimension may advantageously utilize a different swapping scheme in order not to overlap SACCHs of different paired users.

It is noted that the paired users may be at least partially code multiplexed and/or distinguished by training sequence code.

Swapping as described may advantageously be conducted with an adjacent TDMA frame. However, swapping may be utilized with a (e.g., distant) remote frame of the user as well. The swapping of the SACCH may be conducted, e.g., with a preceding or with a succeeding TCH burst, depending on a number (0 or 1) of the half-rate sub-channel number.

Such swapping does not have any impact on neighbor cell measurements performed by the VAMOS user because of the idle frame I remaining at the same locations compared to the legacy user.

Also, the measurement period may remain the same as for the legacy channel.

The concept suggested may also schedule a SID_UPDATE messages in a DTX state according to the location of the SACCH of the paired sub-channel. A SID_UPDATE message may comprise 4 bursts sent with rectangular interleaving during DTX state. In case of AMR, the SID_UPDATE can be sent at every time slot belonging to the user's half-rate allocation.

For example, the SID_UPDATE message for the VAMOS half-rate user 204 in Fig.2 is sent in TDMA frames 6, 8, 10 and 12. Hence, the SID_UPDATE message collides with TCH frames 6, 8, 10 and with SACCH frame 12 of legacy half-rate user 202. In order to avoid such SACCH collision, sending the SID_UPDATE frame could be postponed, i.e. the SID_UPDATE message may be sent in TCH frames 15, 17, 19, 21. Advantageously, interference with the SACCH of the paired sub-channel is suppressed for the entire duration of the DTX state.

It is noted that the DTX state may start with conveying a SID_FIRST message and it may end by conveying a ONSET message. The approach provided may process the SID_UPDATE message via time shifting as described above, whereas the SID_FIRST and ONSET messages may not be subject to such time-shifting.

Advantageously, the approach allows improving the SACCH integrity without any detrimental impact on measurement procedures and radio link control procedures.

Hence, the concept provided allows scheduling transmissions for one sub-channel taking into account a control channel activity of a paired sub-channel by reducing (in particular minimizing) a channel activity, i.e. an interference, when the control channel of the paired sub-channel is scheduled. This may be achieved, e.g., by applying DTX for TCH and/or adaptive scheduling of SID_UPDATE messages.

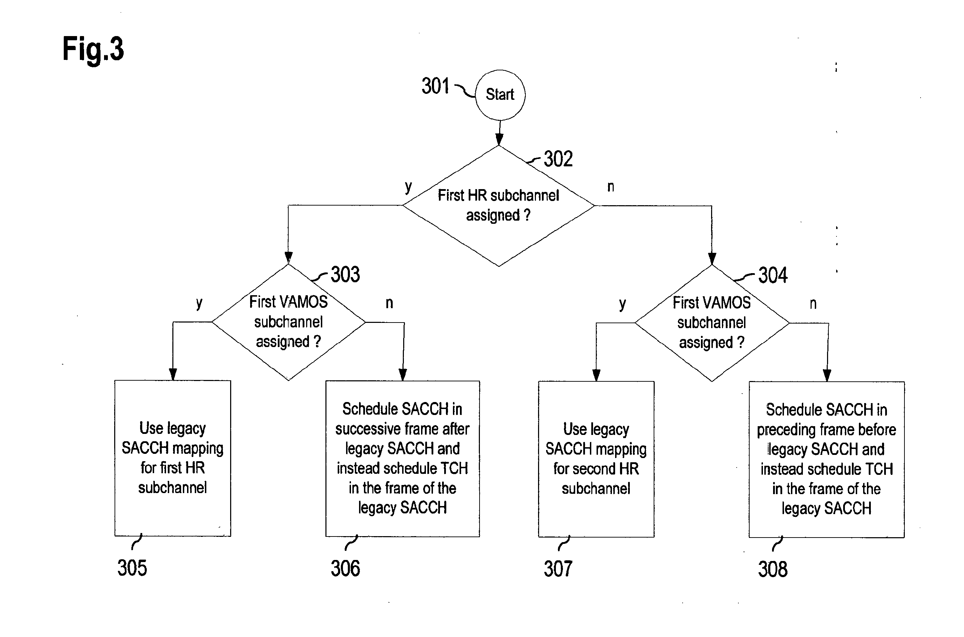

**Fig.3** shows an exemplary flow chart visualizing a "swapped SACCH" concept, i.e. swapping TCH burst and SACCH burst.

After a starting point 301, a base station determines in a box 302 whether or not a first half-rate sub-channel is assigned.

In the affirmative, in a box 303 it is determined whether or not a first VAMOS sub-channel is assigned. In the affirmative, according to a box 305, a legacy SACCH mapping for the first half-rate sub-channel is used. If no first VAMOS sub-channel is assigned according to box 303, a SACCH is scheduled in a successive frame after the legacy SACCH and a TCH is scheduled in the frame of the legacy SACCH according to a box 306.

If there is no first half-rate sub-channel assigned according to box 302, in a box 304 it is determined whether or not a first VAMOS sub-channel is assigned. In the affirmative, according to a box 307, a legacy SACCH mapping is used for the second half-rate sub-channel. If no first VAMOS sub-channel is assigned according to box 304, a SACCH is scheduled in a preceding frame before the legacy SACCH and a TCH is scheduled in the frame of the legacy SACCH as shown in a box 308.

Hence, the left-hand side of the decision made by box 302 deals with users 202 and 204, whereas the right-hand side of said decision refers to users 203 and 205. Accordingly, the box 305 can be associated with user 202, the box 306 can be associated with user 204, the box 307 can be associated with user 203 and the box 308 can be associated with user 205.

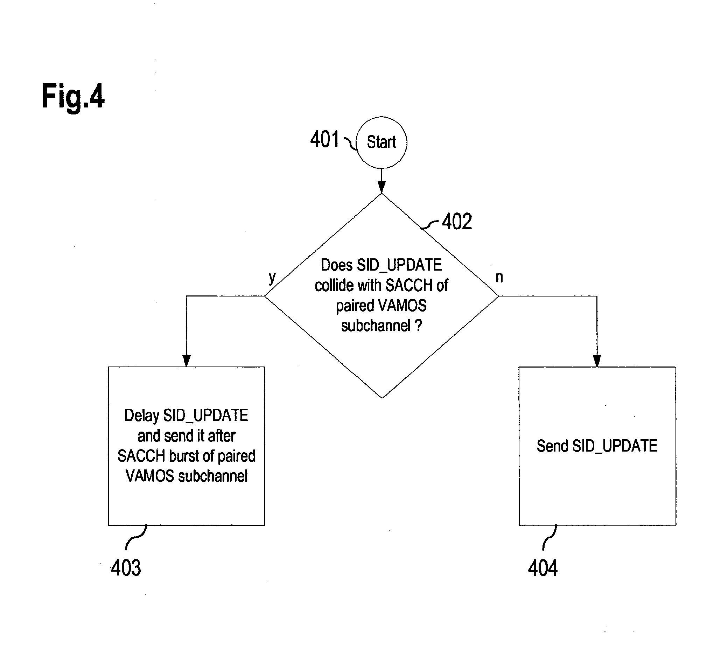

**Fig.4** shows a flow chart depicting adaptive scheduling of SID_UPDATE messages in case of "swapped SACCH".

After a start 401, in a box 402 it is determined whether or not the SID_UPDATE message collides with a SACCH of a paired VAMOS sub-channel. In the affirmative, the SID_UPDATE message is delayed and sent after the SACCH burst of the paired VAMOS sub-channel according to a box 403. Otherwise, according to a box 404, the SID_UPDATE message is sent.

Both procedures can be realized in a mobile terminal capable of the VAMOS service. Hence, such a mobile terminal can be supplied as well as a legacy mobile terminal allowing for an improved SACCH performance for both such mobile terminals in half-rate mode. The improvement due to adaptive SID_UPDATE transmission applied in the VAMOS mobile is in particular advantageous for the legacy mobile terminal.

The improvements suggested in particular apply for GSM half-rate channels in VAMOS mode.

### List of Abbreviations:

- AMR: Adaptive Multi-Rate Codec
- AQPSK: Adaptive QPSK
- CAPEX: Capital expenditure
- CDMA: Code Division Multiple Access
- CIR: Carrier-to-Interference Ratio
- CS: Circuit Switched
- DL: Downlink
- DSL: Digital Subscriber Line
- DTX: Discontinuous Transmission
- EDGE: Enhanced Data rates for GSM Evolution
- eNodeB: evolved NodeB
- FACCH: Fast Associated Control Channel
- FER: Frame Erasure Rate
- GERAN: GSM / EDGE Radio Access Network
- GMSK: Gaussian Minimum Shift Keying
- GSM: Global System for Mobile communications
- HR: half-rate
- I: Idle Frame
- MS: Mobile Station (any kind of terminal or device comprising a wireless interface)
- OPEX: Operational expenditure
- PC: Power Control
- PS: Packet Switched
- QPSK: Quadrature Phase Shift Keying
- S: SACCH Frame
- SACCH: Slow Associated Control Channel
- SID: Silence Indicator Description
- SID_FIRST: Silence Indicator Description (first instance)
- SID_UPDATE: Silence Indicator Description (update)
- T: Traffic Frame
- TA: Timing Advance
- TCH: Traffic Channel
- TDMA: Time Division Multiple Access
- UL: Uplink
- VAMOS: Voice services over Adaptive Multiuser on One Slot

## Claims

1. A method for data processing in a network,
- wherein a channel in DTX state is used for conveying control information other than DTX information within a data unit that is also at least partially used for conveying a DTX information.

2. The method according to claim 1, wherein said control information comprises signaling information, in particular control information of one of layer 1, layer 2 or layer 3 and/or mobility control information, in particular higher layer control information.

3. The method according to any of the preceding claims, wherein said data unit comprises a SID message.

4. The method according to any of the preceding claims, wherein a transmission of DTX information of a channel or a short activity of a data user is delayed in case it collides with a control information of a paired channel.

5. The method according to any of the preceding claims, wherein said control information is conveyed in a control block.

6. The method according to claim 5, wherein the control block or a portion thereof is swapped with a block of a traffic channel.

7. The method according to claim 6, wherein the control block or a portion thereof is swapped with a block of a traffic channel using an adjacent allocation.

8. The method according to any of claims 6 or 7, wherein the control block is swapped with a block of the traffic channel in case it collides with a control information of a paired channel.

9. The method according to any of the preceding claims, wherein said control information is provided via a SACCH.

10. The method according to any of the preceding claims, wherein said network comprises a wireless and/or a wired network.

11. The method according to any of the preceding claims, wherein the network is a wireless network utilizing half-rate channels, in particular in a VAMOS mode.

12. A device comprising and/or being associated with a processor unit and/or a hard-wired circuit and/or a logic device that is arranged such that the method according to any of the preceding claims is executable thereon.

13. The device according to claim 12, wherein said device is a communication device, in particular a or being associated with a base station, a base-transceiver station, a NodeB, a eNodeB, a repeater, a fixed wireless terminal, a modem, a mobile station or an access point.

14. Communication system comprising the device according to any of claims 12 or 13.

## Patentansprüche

1. Verfahren zur Datenverarbeitung in einem Netzwerk,
- wobei ein Kanal in einem DTX-Zustand verwendet wird, um Steuerinformationen außer DTX-Informationen in einer Dateneinheit zu übermitteln, die auch mindestens teilweise für die Übermittlung von DTX-Informationen genutzt wird.

2. Verfahren nach Anspruch 1, wobei die besagten Steuerinformationen Signalisierungsinformationen umfassen, insbesondere Steuerinformationen der Schicht 1, Schicht 2 oder Schicht 3 und/oder
Mobilitätssteuerinformationen, insbesondere Steuerinformationen einer höheren Schicht.

3. Verfahren nach einem der vorstehenden Ansprüche, wobei die besagte Dateneinheit eine SID-Nachricht umfasst.

4. Verfahren nach einem der vorstehenden Ansprüche, wobei eine Übertragung von DTX-Informationen auf einem Kanal oder eine kurze Aktivität eines Datennutzers verzögert wird, falls sie mit einer Steuerinformation eines gepaarten Kanals kollidiert.

5. Verfahren nach einem der vorstehenden Ansprüche, wobei die besagte Steuerinformation in einem Steuerblock übermittelt wird.

6. Verfahren nach Anspruch 5, wobei der Steuerblock oder ein Teil davon gegen einen Block eines Verkehrskanals ausgetauscht wird.

7. Verfahren nach Anspruch 6, wobei der Steuerblock oder ein Teil davon mittels einer Nachbarzuweisung gegen einen Block eines Verkehrskanals ausgetauscht wird.

8. Verfahren nach einem der Ansprüche 6 oder 7, wobei der Steuerblock gegen einen Block des Verkehrskanals ausgetauscht wird, falls er mit einer Steuerinformation eines gepaarten Kanals kollidiert.

9. Verfahren nach einem der vorstehenden Ansprüche, wobei die besagte Steuerinformation über einen SACCH bereitgestellt wird.

10. Verfahren nach einem der vorstehenden Ansprüche, wobei das besagte Netzwerk ein drahtloses und/oder ein drahtgebundenes Netzwerk umfasst.

11. Verfahren nach einem der vorstehenden Ansprüche, wobei das Netzwerk ein drahtloses Netzwerk ist, das Halbratenkanäle verwendet, insbesondere in einem VAMOS-Modus.

12. Vorrichtung, welche eine Prozessoreinheit und/oder eine festverdrahtete Schaltung und/oder eine Logikvorrichtung umfasst oder einer solchen assoziiert ist, welche derart ausgelegt ist, dass das Verfahren nach einem der vorstehenden Ansprüche darauf ausgeführt werden kann.

13. Vorrichtung nach Anspruch 12, wobei die besagte Vorrichtung eine Kommunikationsvorrichtung ist, insbesondere eine Basisstation, eine Basis-Transceiver-Station, ein NodeB, ein eNodeB, ein Repeater, ein ortsfestes drahtloses Endgerät, ein Modem, eine Mobilstation oder ein Zugangspunkt, oder einer/einem solchen assoziiert ist.

14. Kommunikationssystem, welches die Vorrichtung nach einem der Ansprüche 12 oder 13 umfasst.

## Revendications

1. Un procédé de traitement de données dans un réseau,
- dans lequel un canal dans un état DTX est utilisé pour acheminer des informations de commande autres que des informations DTX à l'intérieur d'une unité de données qui est également au moins partiellement utilisée pour acheminer une information DTX.

2. Le procédé selon la revendication 1, dans lequel lesdites informations de commande comprennent des informations de signalisation, plus particulièrement des informations de commande parmi des informations de couche 1, de couche 2 ou de couche 3 et/ou des informations de commande de mobilité, plus particulièrement des informations de commande de couche supérieure.

3. Le procédé selon l'une quelconque des revendications précédentes, dans lequel ladite unité de données contient un message SID.

4. Le procédé selon l'une quelconque des revendications précédentes, dans lequel une transmission d'informations DTX d'un canal ou une activité brève d'un utilisateur de données est retardée dans le cas où cette opération entre en collision avec une information de commande d'un canal apparié.

5. Le procédé selon l'une quelconque des revendications précédentes, dans lequel lesdites informations de commande sont acheminées dans un bloc de commande.

6. Le procédé selon la revendication 5, dans lequel le bloc de commande ou une partie de celui-ci est permuté avec un bloc d'un canal de trafic.

7. Le procédé selon la revendication 6, dans lequel le bloc de commande ou une partie de celui-ci est permuté avec un bloc d'un canal de trafic au moyen d'une attribution adjacente.

8. Le procédé selon l'une quelconque des revendications 6 ou 7, dans lequel le bloc de commande est permuté avec un bloc du canal de trafic dans le cas où il entre en collision avec une information de commande d'un canal apparié.

9. Le procédé selon l'une quelconque des revendications précédentes, dans lequel lesdites informations de commande sont fournies par l'intermédiaire d'un canal SACCH.

10. Le procédé selon l'une quelconque des revendications précédentes, dans lequel ledit réseau comprend un réseau sans fil et/ou un réseau filaire.

11. Le procédé selon l'une quelconque des revendications précédentes, dans lequel le réseau est un réseau sans fil utilisant des canaux à demi-débit, plus particulièrement dans un mode VAMOS.

12. Un dispositif comprenant et/ou étant associé à une unité de processeur et/ou un circuit câblé et/ou un dispositif logique qui est agencé de sorte que le procédé selon l'une quelconque des revendications précédentes soit exécutable sur celui-ci.

13. Le dispositif selon la revendication 12, dans lequel ledit dispositif est un dispositif de communication, plus particulièrement un dispositif ou étant associé à un dispositif parmi une station de base, une station de base-émetteur-récepteur, un noeud B, un noeud B évolué, un répéteur, un terminal sans fil fixe, un modem, une station mobile ou un point d'accès.

14. Un système de communication comprenant le dispositif selon l'une quelconque des revendications 12 ou 13.
